# EUROPEAN PATENT SPECIFICATION

(11) **EP 2 195 385 B1**
(45) Date of publication and mention of the grant of the patent: **01.08.2012**
(21) Application number: 08799490.1
(22) Date of filing: 12.09.2008
(51) Int. Cl.: C08L 67/02, C08L 69/00

(54) **POLYCARBONATE-POLY(ESTER-ETHER) COPOLYMER COMPOSITION, METHOD OF MANUFACTURE, AND ARTICLES THEREFROM**
POLYCARBONAT-POLY(ESTER-ETHER)-COPOLYMER-ZUSAMMENSETZUNG, HERSTELLUNGSVERFAHREN UND GEGENSTÄNDE DARAUS
COMPOSITION DE COPOLYMÈRE POLYCARBONATE-POLY(ESTER-ÉTHER), PROCÉDÉ DE FABRICATION ET OBJETS FABRIQUÉS À PARTIR DE CELLE-CI

(30) Priority: 12.09.2007 US 971768 P; 20.12.2007 US 961692
(43) Date of publication of application: 16.06.2010
(73) Proprietor: SABIC Innovative Plastics IP B.V., 4612 PX Bergen op Zoom (NL)
(72) Inventor: VOLLENBERG, Peter, Evansville Indiana 47712 (US); CHAMBERS, Charles, New Harmony Indiana 47631 (US)
(74) Representative: Müller Schupfner & Partner
(86) International application number: PCT/US2008/076097
(87) International publication number: WO 2009/036229

(56) References cited:
- EP-A- 0 135 493
- US-A- 4 857 604

## Description

### BACKGROUND OF THE INVENTION

This disclosure relates to compositions and methods of preparation of compositions containing poly(ester-ether) copolymers and polycarbonates, methods for their manufacture, and articles formed therefrom.

Thermoplastic poly(ester-ether) copolymers, sometimes referred to as thermoplastic polyetherester (TPEE) elastomers, are a special class of elastomeric materials. These materials exhibit thermoplastic processability on conventional molding equipment and exhibit the elasticity and resistance to impact and flex-fatigue of conventional cured rubbers. The combination of properties is obtained due to the result of the phase separation between the amorphous polyether segments (polyether blocks) and the crystalline polyester segments (polyester blocks) of the copolymer molecule. Because the immiscible segments are copolymerized into a single macromolecular backbone the necessary phase separation that occurs results in discrete domains with dimensions on the order of magnitude of the polymer chain. Thus, the polyether forms soft, amorphous domains that are physically crosslinked by the 'knots' of crystalline, polyester, domains. That is, the amorphous soft blocks provide the elastomeric properties of flexibility and low temperature impact while the presence of the crystalline hard block results in discrete melting points, heat and chemical resistance, and mechanical strength. These materials are also commonly characterized by a brittleness point that is lower than those of conventional rubbers, superior resilience, low creep, and very good resistance to oils, fuels, solvents, and chemicals.

A drawback of TPEE materials possessing a higher content of polyester segments relates to their performance at low temperature (below 0°C), where ductility (a measure of plastic deformation) typically decreases as Shore D (a measure of hardness) increases. These opposing trends in ductility and hardness become more pronounced as the amount of the polyester component increases.

TPEE compositions comprising conventional polybutylene terephthalate (PBT) segments in an amount greater than 75 weight percent exemplify compositions lacking good flexibility and ductility at low temperature. As a result, TPEEs of higher polyester content are currently unsuitable for applications where good flexibility (Shore D hardness in the range of 50 to 70) and low temperature ductility are desired.

US 4,857,604 relates to low modulus elastomeric compositions having improved physical properties, particularly improved tensile strength and tensile elongation, with retained high impact strength. Specifically, low modulus copolyetherester compositions may be prepared having improved physical properties by blending therewith a polycarbonate and, optionally, a polyester, particularly poly(alkylene therephthalate) polyesters. Especially preferred polycarbonates are the aromatic polycarbonates.

EP 0 135 493 A1 relates to polyblends and specifically to polyblends of styrenemaleic anhydride (SMA) polymers, acrylonitrile-butadiene-styrene (ABS) polymers and polycarbonates (PC) with certain thermoplastic copolyetheresters capable of conferring on the SMA polymer and blends thereof with ABS and PC improved impact properties.

The current disclosure addresses the challenge of formulating TPEE blends to achieve the desired property balances for applications that require good flexibility and low temperature ductility.

### BRIEF DESCRIPTION OF THE INVENTION

The present invention discloses a composition comprising, based on the total weight of the composition, from 5 to 95 weight percent of a polysiloxane-polycarbonate comprising units of the formulas 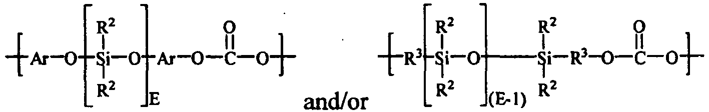 wherein each R² is independently a C₁₋₁₃ monovalent organic group, each Ar is independently a C₆₋₃₆ arylene group wherein the bonds are directly connected to an aromatic moiety, each R³ is independently a divalent C₁₋₃₀ organic group, and E is an integer having an average value of 2 to 1,000, wherein the number of units and the value of E is such that the polycarbonate comprises at least 6 weight percent of organosiloxane units, from 5 to 95 weight percent of a poly(ester-ether) copolymer, wherein the poly(ester-ether) copolymer comprises units derived from terephthalic acid or a chemical equivalent thereof, units derived from butane diol or a chemical equivalent thereof, and 23 to 70 weight percent of units derived from poly(oxytetramethylene) glycol or a chemical equivalent thereof, based on the weight of the copolymer; from 0 to 50 weight percent of at least one polymer selected from the group consisting of polysulfones, polyethersulfones, polyimides, polyetherimides, polyphenylene ether, impact modifiers and combinations thereof; and from 0.001 to 0.5 weight percent of a quencher; wherein the composition exhibits a Shore D in the range of 45 to 75, and a low temperature notched Izod ductility of at least 80% at -40°C, as measured by ASTM D256.

In an embodiment, a composition comprises, based on the total weight of the composition: 20 to 80 weight percent or more of a polysiloxane-polycarbonate copolymer comprising units of the formula 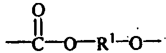 wherein each R¹ comprises units of the formula 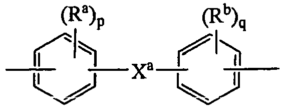 wherein R^{a} and R^{b} are each independently a halogen or a C₁₋₁₂ alkyl, X^{a} is a single bond, -O-, -S-, -S(O)-, -S(O)₂-, -C(O)-, or a C₁₋₁₈ organic group, and p and q are each independently 0 to 4, and units of the formulas 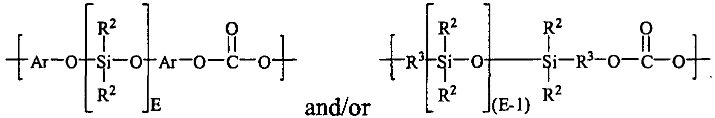 wherein each R² is independently a C₁₋₁₃ monovalent organic group, each Ar is independently a C₆₋₃₆ arylene group wherein the bonds are directly connected to an aromatic moiety, each R³ is independently a divalent C₁₋₃₀ organic group, and E is an integer having an average value of 2 to 1,000, wherein the number of the silicone units and E is effective to provide an organosiloxane content of a least 6 weight percent, based on the weight of the copolymer; from 20 to 80 weight percent of a poly(ester-ether) copolymer, wherein the poly(ester-ether) copolymer comprises units derived from terephthalic or a chemical equivalent thereof, units derived from butane diol or a chemical equivalent thereof, and 23 to 70 weight percent of units derived from poly(oxytetramethylene) glycol or a chemical equivalent thereof, based on the weight of the copolymer; and 0.001 to 0.5 weight percent of a quencher; wherein the composition exhibits a low temperature notched Izod ductility of at least 100% at-40°C, as measured by ASTM D256.

In another embodiment a composition comprises, based on the total weight of the composition, from 25 to 75 weight percent of a polysiloxane-polycarbonate copolymer comprising from 75 to 93 mole percent of units derived from bisphenol A and from 7 to 25 mole percent of units of the formula 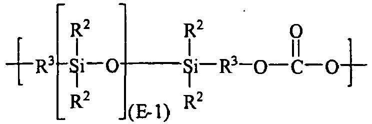 wherein each R² is independently the same or different C₁₋₃ monovalent organic group, each R³ is the same or different divalent C₁₋₁₀ organic group, and E is an integer from 2 to 500; from 25 to 75 weight percent of a poly(ester-ether) copolymer, each based on the total weight of the polyester and the poly(ester-ether) copolymer, wherein the poly(ester-ether) copolymer comprises units derived from terephthalic or a chemical equivalent thereof, units derived from butane diol or a chemical equivalent thereof, and 23 to 70 weight percent of units derived from poly(oxytetramethylene) glycol or a chemical equivalent thereof, based on the weight of the copolymer; from 0 to 20 weight percent of at least one member selected from the group consisting of polysulfones, polyethersulfones, polyimides, polyetherimides, polyphenylene ether, impact modifiers and combinations thereof; from 0.001 to 0.5 weight percent of a quencher; and from 0.1 to 4 weight percent an antioxidant; wherein the composition exhibits a low temperature notched Izod ductility of at least 80% at -60°C, as measured by ASTM D256.

In another embodiment, an article comprises the disclosed compositions.

In another embodiment a method of forming a composition comprises melt blending the components of the disclosed compositions.

In still another embodiment, a method of forming an article comprises shaping, extruding, blow molding, or injection molding the disclosed compositions to form the article.

These and other features, aspects, and advantages of the present invention will become better understood with reference to the following description and appended claims.

### DETAILED DESCRIPTION OF THE INVENTION

This invention is based on the discovery that particular blends comprising thermoplastic poly(ester-ether) copolymers (TPEEs) and polysiloxane-polycarbonates exhibit outstanding low temperature behavior. The disclosed blends have high ductility at -40°C and high Shore D values, and are suitable to many consumer applications such as sporting equipment, automobile components, and other consumer goods.

Other than in the operating examples or where otherwise indicated, all numbers or expressions referring to quantities of ingredients, reaction conditions, and the like, used in the specification and claims are to be understood as modified in all instances by the term "about." Various numerical ranges are disclosed in this patent application. Because these ranges are continuous, they include every value between the minimum and maximum values. Unless expressly indicated otherwise, the various numerical ranges specified in this application are approximations.

All molecular weights in this application refer to weight average molecular weights. All such mentioned molecular weights are expressed in daltons.

All ASTM tests and data are from the 2003 edition of the Annual Book of ASTM Standards unless otherwise indicated.

With respect to the terms "terephthalic acid group," "isophthalic acid group," "ethylene glycol group," and "diethylene glycol group" to indicate the weight percent (wt%) of the group in a composition, the term "isophthalic acid group(s)" means the group having the formula -OC(0)C₆H₄C(O)-, the term "terephthalic acid group(s)" means the group having the formula -OC(O)C₆H₄C(O)- the term diethylene glycol group means the group having -OC₂H₄-O-C₂H₄-, the term "butane diol group(s)" means the group having the formula -OC₄H₈-, and the term "ethylene glycol groups(s)" means the group having formula -OC₂H₄-.

The disclosed thermoplastic blends comprise a polysiloxane-polycarbonate, a poly(ester-ether), and a quencher. The poly(ester-ether) is a block copolymer comprising soft blocks and hard blocks. The soft blocks in these copolymers provide the elastomeric properties. The hard blocks are crystallizable materials that provide the physical integrity, heat resistance and chemical resistance. The properties of TPEE copolymers are a function of the molecular structure of the soft blocks and the hard blocks, the molecular weights of these blocks, and the relative amounts of them present in the copolymer. The TPEE copolymer can be characterized by the glass transition temperature (Tg) of the soft block and the melting temperature (Tm) of the hard block. In general, the Tg of the soft block can be -25 to -85°C, specifically -45 to -65°C, and the Tm of the hard block can be 120 to 200°C, specifically 150 to 195°C.

TPEE copolymers accordingly comprise units derived from the reaction of a dicarboxylic acid component (or chemical equivalent thereof) with two types of diols (or chemical equivalent thereof), a short chain C₁₋₁₀ diol, and a poly(oxyalkylene) diol.

The dicarboxylic acid component can be one or more of the dicarboxylic acids described above in connection with the polyesters. In one embodiment, the dicarboxylic acid is aromatic, for example terephthalic acid, isophthalic acid, or a combination comprising at least one of the foregoing acids. In a specific embodiment, the dicarboxylic acid is terephthalic acid. In another embodiment, the dicarboxylic acid is a combination of terephthalic acid and isophthalic acid. Suitable short chain diols include C1-8 diols as described above in connection with the polyester. Specific diols are ethylene glycol, trimethylene glycol or 1,3-propane diol and butane diol, even more specifically butane diol.

The poly(oxyalkylene) diol is derived from the polymerization of a C₁₋₆ diol or a combination comprising one or more C₁₋₆ diols, in particular C₂₋₄ diols, or the chemical equivalents thereof. More particularly, the poly(oxyalkylene) diol is poly(oxytetramethylene) glycol, and can be prepared by well-known techniques. The poly(oxyalkylene) diol, and in particular the poly(oxytetramethylene) glycol, has a weight average molecular weight (Mw) of 100 to 5,000, or more specifically, 200 to 4000, or even more specifically, 500 to 3500.

A specific TPEE copolymer is a poly(butylene terephthalate/isophthalate-oxytetramethylene) copolymer. The TPEE copolymer comprises 23 to 73 wt%, more specifically 25 to 55 wt%, of units derived from poly(oxytetramethylene) glycol or chemical equivalents thereof, based on the weight of the copolymer.

The poly(butylene terephthalate-oxytetramethylene) copolymer can further comprise isophthalic acid in addition to terephthalic acid. In one embodiment, the poly(butylene terephthalate/isophthalate-oxytetramethylene) copolymers comprises 0 to 40 mole% of units derived from isophthalic acid or a chemical equivalent thereof, based on the total number of isophthalate and terephthalate units. For example, the poly(butylene terephthalate/isophthalate-oxytetramethylene) copolymer can comprise less than 5 mole% of isophthalate units, specifically 0 to 5 mole% of isophthalate units, based on the total number of isophthalate and terephthalate units in the copolymer. In another embodiment, the poly(butylene terephthalate/isophthalate-oxytetramethylene) copolymer comprises greater than 5 mole % of isophthalate units, specifically 5 to 40 mole %, based on the total number of isophthalate and terephthalate units in the copolymer.

The poly(butylene terephthalate-oxytetramethylene) copolymer, in another embodiment, can further be derived from diethylene glycol and ethylene glycol monomers that are added during the polymerization. The amount of such monomers can vary, depending on the application. For instance, in one embodiment, the diethylene glycol and diethylene glycol can be present in an amount ranging from more than 0 to 5 weight % diethylene glycol or from more than 0 to 5 weight % ethylene glycol. In one embodiment, diethylene glycol can be present in an amount ranging from 0.02 to 2 weight % of diethylene glycol. In another embodiment, the ethylene glycol can be present in an amount ranging from 0.1 to 5 weight percent ethylene glycol

The poly(ester-ether) copolymer can be prepared by conventional techniques, as described, for example in U.S. Pat. No. 4,349,469. Up to 1.5 mol %, based on the acid or glycol component, of a polybasic acid or polyhydric alcohol branching agent having at least three COOH or OH functional groups and from 3 to 60 carbon atoms can be present to provide a branched copolymer. Esters of many such acids or polyols can also be used. Suitable branching agents include trimellitic acid or anhydride, trimesic acid, trimethylol ethane, trimethylol propane, and trimer acid.

A variety of poly(ester-ether) copolymers are commercially available, for example from DSM under the trade names ARNITEL EM400 and ARNITEL EL630; from Dupont under the trade names, HYRTEL 3078, HYTREL 4056, HYTREL 4556, and HYTREL 6356; and from Eastman Chemical under the trade name of ECDEL 9966. In all cases the soft block is derived from tetrahydrofuran. In HYTREL 4556, HYTREL 6356, ARNITEL EM400, and ARNITEL EL630, the hard block is PBT-based. In HYTREL 4056, the hard block contains isophthalate moieties in addition to the terephthalate units in the PBT blocks. In ECDEL 9966, the hard block is based on 1,4-cyclohexyldimethylene cyclohexyl dicarboxylate (PCCD).

In an embodiment the polysiloxane-polycarbonate comprises units of the formula: 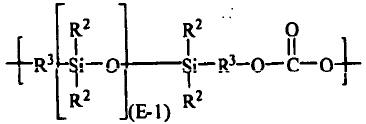 wherein each R² is independently the same or different C₁₋₃ monovalent organic group, each R³ is the same or different divalent C₁₋₁₀ organic group, and E is an integer from 2 to 500.

The polysiloxane-polycarbonate copolymer can comprise units of the formula: 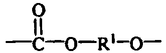 wherein each R¹ comprises units the formula 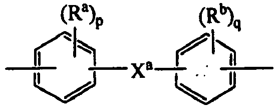 wherein R^{a} and R^{b} are each independently a halogen or a C₁₋₂ alkyl, X^{a} is a single bond, -O-, -S-, -S(O)-, -S(O)₂-, -C(O)-, or a C₁₋₁₈ organic group, and p and q are each independently 0 to 4, and units of the formulas 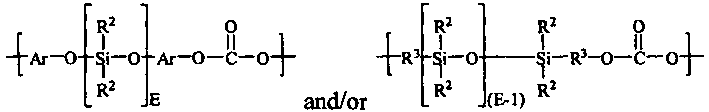 wherein each R² is independently a C₁₋₁₃ monovalent organic group, each Ar is independently a C₆₋₃₆ arylene group wherein the bonds are directly connected to an aromatic moiety, each R³ is independently a divalent C₁₋₃₀ organic group, and E is an integer having an average value of 2 to 1,000, wherein the number of the silicone units and E is effective to provide a organosiloxane content of a least 6 weight percent, based on the weight of the copolymer.

The polysiloxane-polycarbonate copolymer can have an average molecular weight (, measured, for example, by ultra-centrifugation or light scattering, of greater than or equal to 10,000 to 200,000, or, more specifically, 20,000 to 100,000.

It is generally desirable to have polydimethylsiloxane units contribute 0.5 to 80 weight percent of the total weight of the polysiloxane-polycarbonate copolymer or an equal molar amount of other polysiloxane. Even more specific is a range of 1 to 10 weight percent of organosiloxane units in the polysiloxane-polycarbonate copolymer.

The polysiloxane-polycarbonate copolymer comprises polysiloxane domains having an average domain size of less than or equal to 45 nanometers. Within this range the polysiloxane domains may be greater than or equal to 5 nanometers. Also within this range the polysiloxane domains may be less than or equal to 40 nanometers, or, more specifically, less than or equal to 10 nanometers. Domain size may be determined by Transmission Electron Microscopy (TEM) as follows. A sample of the polysiloxane-polycarbonate copolymer is injection molded into a sample 60 millimeters square and having a thickness of 3.2 millimeters. A (5 millimeters by 10 millimeters) is cut from the middle of the sample. The block is then sectioned from top to bottom by an ultra microtome using a diamond knife at room temperature. The sections are 100 nanometers thick. At least 5 sections are scanned by TEM at 100 to 120 kilovolts (kV) and the images recorded at 66,000X magnification. The polysiloxane domains were counted and measured, the domain size reflecting the longest single linear dimension of each domain. The domain sizes over the 5 sections were then averaged to yield the average domain size.

Also specifically envisioned are polysiloxane-polycarbonate copolymers prepared by direct synthesis comprising a polycarbonate matrix and the desired embedded polysiloxane domains. In a of two polysiloxane-polycarbonate copolymers the individual copolymers are generally difficult to separate or to distinguish. With Transmission Electron Microscopy (TEM) it is however possible to distinguish in the polycarbonate matrix and embedded polysiloxane domains.

The polysiloxane-polycarbonate copolymer, can be made by a variety of methods such as interfacial polymerization, melt polymerization, and solid-state polymerization. For example, the polysiloxane-polycarbonate can be made by introducing phosgene under interfacial reaction conditions into a mixture of a dihydric aromatic compound, such as a hydroxyaryl-terminated polysiloxane. The polymerization of the reactants may be facilitated by use of a tertiary amine catalyst or a phase transfer catalyst.

Non-limiting examples of the aliphatically unsaturated monohydric phenols, which can be used to make the hydroxyaryl-terminated polysiloxanes include, for example, 4-allyl-2-methoxy phenol (herein after referred to as eugenol); 2-alkylphenol, 4-allyl-2-methylphenol; 4-allyl-2-phenylphenol; 4-allyl-2-bromophenol; 4-allyl-2-t-butoxyphenol; 4-phenyl-2-phenylphenol; 2-methyl-4-propylphenol; 2-allyl-4,6-dimethylphenol; 2-allyl-4-bromo-6-methylphenol; 2-allyl-6-methoxy-4-methylphenol and 2-allyl-4,6-dimethylphenol. Mixtures of aliphatically unsaturated monohydric phenols can also be used.

Among the suitable phase transfer catalysts which can be utilized are catalysts of the formula (R⁵)₄Q⁺X, where R⁵ is independently at each occurrence an alkyl group having 1 to 10 carbons, Q is a nitrogen or phosphorus atom, and X is a halogen atom, or an -OR⁶ group, where R⁶ is selected from a hydrogen, an alkyl group having 1 to 8 carbon atoms and an aryl group having 6 to 18 carbon atoms. Some of the phase transfer catalysts which may be used include [CH₃(CH₂)₃]₄NX, [CH₃(CH₂)₃]₄PX, [CH₃(CH₂)₅]₄NX, [CH₃(CH₂)₆]₄NX, [CH₃(CH₂)₄]₄NX, CH₃[CH₃(CH₂)₃]₃NX, CH_{3[}CH₃(CH₂)₂]₃NX wherein X is selected from Cl⁻, Br⁻ or - OR⁶. Mixtures of phase transfer catalysts may also be used. An effective amount of a phase transfer catalyst is greater than or equal to 0.1 weight percent (wt%) and in one embodiment greater than or equal to 0.5 wt% based on the weight of bisphenol in the phosgenation mixture. The amount of phase transfer catalyst may be less than or equal to 10 wt% and more specifically less than or equal to 2 wt% based on the weight of bisphenol in the phosgenation mixture.

Non-limiting examples of dihydric aromatic compounds which may be subjected to phosgenation include, resorcinol; 4-bromoresorcinol; hydroquinone; 4,4'-dihydroxybiphenyl; 1,6-dihydroxynaphthalene; 2,6-dihydroxynaphthalene; bis(4-hydroxyphenyl)methane; bis(4-hydroxyphenyl)diphenylmethane; bis(4-hydroxyphenyl)-1-naphthylmethane; 1,1-bis(4-hydroxyphenyl)methane; 1,1-bis(4-hydroxyphenyl)ethane; 1,2-bis(4-hydroxyphenyl)ethane; 1,1-bis(4-hydroxyphenyl)-1-phenylethane; 2,2-bis(4-hydroxyphenyl)propane; 2-(4-hydroxyphenyl)-2-)3-hydroxyphenyl)propane; 2,2-bis(4-hydroxyphenyl)butane; 2,2-bis(4-hydroxyphenyl) octane; 1,1-bis(4-hydroxyphenyl)propane; 1,1-bis(4-hydroxyphenyl)n-butane; bis(4-hydroxyphenyl)phenylmethane; 2,2-bis(4-hydroxy-1-methylphenyl) propane; 1,1-bis(4-hydroxy-tert-butylphenyl)propane; 2,2-bis(4-hydroxy-3-bromophenyl)propane; 1,1-bis (hydroxyphenyl)cyclopentane; 1,1-bis(4-hydroxyphenyl)cyclohexane; 1,1-bis(4-hydroxyphenyl)isobutene; 1,1-bis(4-hydroxyphenyl)cyclododecane; trans-2,3-bis(4-hydroxyphenyl)-2-butene; 2,2-bis(4-hydroxyphenyl)adamantine; (alpha, alpha'-bis(4-hydroxyphenyl)toluene. bis(4-hydroxyphenyl)acetonitrile; 2,2-bis(3-methyl-4-hydroxyphenyl)propane; 2,2-bis(3-ethyl-4-hydroxyphenyl)propane; 2,2-bis(3-n-propyl-4-hydroxyphenyl)propane; 2,2-bis(3-isopropyl-4-hydroxyphenyl)propane; 2,2-bis(3-sec-butyl-4-hydroxyphenyl)propane; 2,2-bis(3-t-butyl-4-hydroxyphenyl)propane; 2,2-bis(3-cyclohexyl-4- hydroxyphenyl)propane; 2,2-bis(3-allyl-4-hydroxyphenyl)propane; 2,2-bis(3-methoxy-4-hydroxyphenyl)propane; 2,2-bis(4-hydroxyphenyl)hexafluoropropane; 1,1-dichloro-2,2-bis(4-hydroxyphenyl)ethylene; 1,1-dibromo-2,2-bis(4-hydroxyphenyl)ethylene; 1,1-dichloro-2,2-bis(5-phenoxy-4-hydroxyphenyl)ethylene; 4,4'-dihydroxybenzophenone; 3,3-bis(4-hydroxyphenyl)-2-butanone; 1,6-bis(4-hydroxyphenyl)-1,6-hexanedione; ethylene glycol bis(4-hydroxyphenyl)ether; bis(4-hydroxyphenyl)ether; bis(4-hydroxyphenyl)sulfide; bis(4-hydroxyphenyl)sulfoxide; bis(4-hydroxyphenyl)sulfone; 9,9-bis(4-hydroxyphenyl)fluorine; 2,7-dihydroxypyrene; 6,6'-dihydroxy-3,3,3',3'-tetramethylspiro(bis)indane("spirobiindane bisphenol"); 3,3-bis(4-hydroxyphenyl)phthalide; 2,6-dihydroxydibenzo-p-dioxin; 2,6-dihydroxythianthrene; 2,7-dihydroxyphenoxathin; 2,7-dihydroxy-9,10-dimethylphenazine; 3,6-dihydroxydibenzofuran; 3,6-dihydroxydibenzothiophene and 2,7-dihydroxycarbazole. Mixtures of dihydric aromatic compounds may also be used.

The polysiloxane-polycarbonate copolymer, can be produced by blending an aromatic dihydroxy compound with an organic solvent and an effective amount of phase transfer catalyst or an aliphatic tertiary amine, such as triethylamine, under interfacial conditions. Sufficient alkali metal hydroxide may be utilized to raise the pH of the bisphenol reaction mixture prior to phosgenation, to 10.5 pH. This may result in the dissolution of some of the bisphenol into the aqueous phase. Suitable organic solvents that may be used are, for example, chlorinated aliphatic hydrocarbons, such as methylene chloride, chloroform, carbon tetrachloride, dichloroethane, trichloroethane, tetrachloroethane, dichloropropane, and 1,2-dichloroethylene; substituted aromatic hydrocarbons such as chlorobenzene, o-dichlorobenzene, and the various chlorotoluenes. Mixtures of organic solvents may also be used. In one embodiment the solvent comprises methylene chloride.

Aqueous alkali metal hydroxide or alkaline earth metal hydroxide addition can be used to maintain the pH of the phosgenation mixture near the pH set point, which may be in the range of 10 to 12. Some of the alkali metal or alkaline earth metal hydroxides, which may be employed, are for example, sodium hydroxide, potassium hydroxide, and calcium hydroxide. In one embodiment the alkali metal hydroxide used comprises sodium hydroxide.

During the course of phosgene introduction at a pH of 10 to 12, and depending upon the rate of phosgene addition, the pH can be lowered to allow for the introduction of the hydroxyaryl-terminated polysiloxane. End-capping agents such as phenol, p-butylphenol, p-cumylphenol, octylphenol, nonylphenol, and other mono hydroxy aromatic compounds may be used to regulate the molecular weight or to terminate the reaction.

Alternatively the polysiloxane-polycarbonate copolymer, can be produced by an aromatic dihydroxy compound in the presence of a phase transfer catalyst at a pH of 5 to 8 to form bischloroformate oligomers. Then, in the polysiloxane-polycarbonate copolymer, to this is added a hydroxyaryl-terminated polysiloxane, which is allowed to react at a pH of 9 to 12 for a period of time sufficient to effect the reaction between the bischloroformate oligomers and the hydroxyaryl-terminated polydiorganosiloxane, typically a time period of 10 to 45 minutes. Generally there is a large molar excess of chloroformate groups relative to hydroxyaryl groups. The remaining aromatic dihydroxy compound is then added, and the disappearance of chloroformates is monitored, usually by phosgene paper. When substantially all chloroformates have reacted, an end-capping agent and optionally a trialkylamine are added and the reaction phosgenated to completion at a pH of 9 to 12.

The polysiloxane-polycarbonate copolymer, can be made in a wide variety of batch, semi-batch or continuous reactors. Such reactors are, for example, stirred tank, agitated column, tube, and recirculating loop reactors. Recovery of the polysiloxane-polycarbonate can be achieved by any means known in the art such as through the use of an anti-solvent, steam precipitation or a combination of anti-solvent and steam precipitation.

The compositions can comprise combinations of two or more polysiloxane-polycarbonate copolymers.

It is also possible to employ two or more different dihydroxy compounds or a copolymer of a dihydric phenol with a glycol or with a hydroxy-terminated or acid-terminated polyester or with a dibasic acid or hydroxy acid in the event a carbonate copolymer rather than a homopolymer is desired for use. Polyarylates and polyester-carbonate resins or their blends may also be used. Branched polycarbonates as well as blends of linear polycarbonate and a branched polycarbonate may be employed. The branched polycarbonates may be prepared by adding a branching agent during polymerization.

These branching agents are well known and may comprise polyfunctional organic compounds containing at least three functional groups, which may be hydroxyl, carboxyl, carboxylic anhydride, haloformyl, and mixtures thereof. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. The branching agents may be added at a level of 0.05-2.0 weight percent. Branching agents and procedures for making branched polycarbonates are described in U.S. Patent Nos. 3,635,895 and 4,001,184. Many types of polycarbonates end groups may be used in the polycarbonate composition.

In one embodiment the polysiloxane-polycarbonates are based on bisphenol A. The weight average molecular weight of the polycarbonate can be 5,000 to 100,000 daltons, or, more specifically 10,000 to 65,000 daltons, or, even more specifically, 15,000 to 35,000 daltons.

The compositions further comprise a quencher. Quenchers are stabilizer agents that inhibit activity of any catalysts that may be present in the polymers to prevent an accelerated interpolymerization and degradation of the thermoplastic. The suitability of a particular compound for use as a quencher and the determination of how much is to be used as a quencher may be readily determined by preparing a mixture of the polyester resin component and the polycarbonate and determining the effect on melt viscosity, gas generation or color stability or the formation of interpolymer. In one embodiment a quencher is used in an amount of 0.001 to 0.5 wt% based on total weight of the composition. In one embodiment the thermoplastic composition comprises at least two quenchers wherein the quenchers are selected from a group consisting of phosphorous containing compounds, boric containing acids, aliphatic or aromatic carboxylic acids i.e., organic compounds the molecule of which comprises at least one carboxy group, anhydrides, polyols, and epoxy polymer.

In one embodiment, the catalyst quenchers are phosphorus-containing derivatives, such as organic phosphites as well as phosphorous acid. Examples include but are not limited to diphosphites, phosphonates, metaphosphoric acid; arylphosphinic, and arylphosphonic acids.

It should be noted that some quenchers, as in the class of phosphites, also provide the thermoplastic resin additional desirable properties, e.g., fire resistance. The favored stabilizers include an effective amount of an acidic phosphate salt; an acid, alkyl, aryl or mixed phosphite having at least one acidic hydrogen; a Group IB or Group IIB metal phosphate salt; a phosphorus oxo acid, a metal acid pyrophosphate or a mixture thereof. The acidic phosphate salts include sodium dihydrogen phosphate, mono zinc phosphate, potassium hydrogen phosphate, calcium dihydrogen phosphate, and the like. The phosphites may be of the formula: 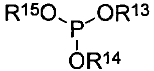 where R¹³, R¹⁴, and R¹⁵ are independently selected from the group consisting of hydrogen, alkyl, and aryl with the proviso that at least one of R¹³, R¹⁴, and R¹⁵ is hydrogen. The phosphate salts of a Group IB or Group IIB metal include zinc phosphate and the like. The phosphorus oxo acids include phosphorous acid, phosphoric acid, polyphosphoric acid, or hypophosphorous acid.

The polyacid pyrophosphates may be of the formula: M_{zx}H_{y}PₙO₃ₙ₊₁ wherein M is a metal, x is a number ranging from 1 to 12 and y is a number ranging 1 to 12, n is a number from 2 to 10, z is a number from 1 to 5 and the sum of (zx)+y is equal to n+2. The preferred M is an alkaline or alkaline earth metal. Preferred quenchers are oxo acids of phosphorus or acidic organo phosphorus compounds.

One exemplary quencher is a polyol represented by the formula R¹⁶(OH)ᵣ wherein each R¹⁶ is independently a substituted or unsubstituted aliphatic moiety, a substituted or unsubstituted aliphatic-aromatic moiety containing from 2 to 20 carbon atoms, and r is a positive integer having a value of from 2 up to the number of replaceable hydrogen atoms present on R¹⁶, specifically having a value of from 2 to 12. In one embodiment when R¹⁶ is a substituted or unsubstituted aliphatic-aromatic moiety wherein the hydroxyl groups are bonded to the aliphatic portion of the moiety.

In one embodiment each R¹⁶ is a substituted or unsubstituted aliphatic moiety, including but not restricted to the acylic aliphatic groups and cycloaliphatic groups. The acylic aliphatic moieties are specifically those containing from 2 to 20 carbon atoms in either a straight chain or branched chain. In one embodiment the cyclic aliphatic moieties are preferably those containing from 4 to 8 ring carbon atoms. In another embodiment the cyclic aliphatic moieties may contain alkyl substituent groups on the ring carbon atoms, and the hydroxyl groups can be bonded to either the ring carbon atoms or to the alkyl substituent groups, or to both. In yet another embodiment R16 is a substituted or unsubstituted aliphatic-aromatic moieties containing an aromatic portion which preferably contains from 6 to 12 ring carbon atoms, which include but not limited to phenyl, naphthyl, and biphenyl, and an aliphatic portion bonded to the ring carbon atoms of the aromatic portion, with the hydroxyl groups being present only the aliphatic portion.

In one embodiment the polyols are the acylic aliphatic polyhydric alkenols, with the hexahedra alkenols being preferred. Preferred polyols of this type are those wherein the hydroxyl groups are bonded to different carbon atoms of the acylic aliphatic moiety. Some illustrative non-limiting examples of polyols include cyclo-hexane dimethanol, butanediol, mannitol, sorbitol, 1,3-propanediol, glycerol, 1,2-cyclopentanediol, instill, 1,3,5-cyclohexanediol, 1,2,3,4,5-penta-hydrocypentane, and 1,1,2,2-tetrahydroxyethane.

The quencher can also be a carboxylic acid derivative having the above formula: 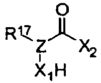 wherein X₁ is either zero or NH, X₂ is either OR¹⁸ or NHR¹⁸ and is always the former when X₁ is NH. The R¹⁸ is hydrogen, alkyl, or aryl radicals having up to 10 carbon atoms. In one embodiment Z is CH or a substituted or unsubstituted aromatic carbocyclic radical. The substituents on the ring do not materially affect the character of the substituted carboxylic acid derivative for the purposes of this invention. The R¹⁷ is either hydrogen or a hydrocarbon-based radical including but not limited to both hydrocarbon and substituted hydrocarbon radicals, provided the substituents satisfy the above criterion. Most often, R¹⁷ is hydrogen, alkyl, or aryl radical that may contain substituents such as hydroxy, carboxy and carbalkoxy. In one embodiment the carbalkoxy radical is OR¹⁸.

Other types of quenchers comprise substituted carboxylic acid derivatives, for example alpha-hydroxy, or alpha-amino aliphatic acid derivatives or o-hydroxy or o-amino aromatic acid derivatives. Illustrative compounds of this type are alkyl salicylate like for example, methyl salicylate, ethyl salicylate, aryl salicylate, salicylamide, glycine, malic acid, mandelic acid, and dibutyl tartrate.

The amount of the quencher added to the thermoplastic composition is an amount that is effective to stabilize the thermoplastic composition. In one embodiment the amount is at least 0.001 to 0.5 weight percent, specifically 0.01 to 0.1 weight percent, based on the total weight of the thermoplastic resin composition. In another embodiment the amount of quencher is between 25 and 2000 parts per million, specifically 50 to 1500 parts per million, each based on the total parts by weight of the thermoplastic composition. In general, if less than 0.001 weight percent of quencher mixture is present, there is no appreciable stabilization of the thermoplastic composition. If a large amount of the quencher is used than some of the advantageous properties of the thermoplastic composition can be adversely affected. The amount of quencher used is thus an amount which is effective to stabilize the composition therein but insufficient to substantially deleteriously affect substantially most of the advantageous properties of said composition.

The compositions can optionally further comprise any of the additives and property modifiers that poly(ester-ethers) and polysiloxane-polycarbonates are usually combined with, with the proviso that the additives are selected so as to not significantly adversely affect the desired properties of the composition, for example, low temperature ductility and Shore D value. Exemplary additives include, for example, quenchers, antioxidants, flame retardants, heat stabilizers, light stabilizers, plasticizers, lubricants, antistatic agents, colorants, mold release agents, and/or fillers such as glass, clay, mica, and the like.

Other polymers can also be blended into the composition, in amounts of up to 50 wt%, specifically more than zero to 20 wt% of the total weight of the composition. Examples of polymers that can be blended to make polymer blends are polysulfones, polyethersulfones, polyimides, polyetherimides, polyphenylene ethers, and impact modifiers.

In one embodiment the thermoplastic composition comprises up to 50 wt%, specifically up to 20 wt% of an impact modifier. Exemplary impact modifiers are a natural rubber, low-density polyethylene, high-density polyethylene, polypropylene, polystyrene, polybutadiene, styrene-butadiene, styrene-butadiene-styrene, styrene-ethylene-butadiene-styrene, acrylonitrile-butadiene-styrene, acrylonitrile-ethylene-propylene-diene-styrene, styrene-isoprene-styrene, methyl methacrylate-butadiene-styrene, a styrene-acrylonitrile, an ethylene-propylene copolymer, an ethylene-propylene-diene terpolymer, an ethylene-methyl acrylate copolymer, an ethylene-ethyl acrylate copolymer, an ethylene-vinyl acetate copolymer, an ethylene-glycidyl methacrylate copolymer, a polyethylene terephthalate-poly(tetramethyleneoxide)glycol block copolymer, a polyethylene terephthalate/isophthalate-poly(tetramethyleneoxide)glycol block copolymer, a silicone rubber, or a combination comprising at least one of the foregoing impact modifiers.

The compositions can comprise a colorant such as a pigment and/or dye additive. Suitable pigments include for example, inorganic pigments such as metal oxides and mixed metal oxides such as zinc oxide, titanium dioxides, iron oxides or the like; sulfides such as zinc sulfides, or the like; aluminates; sodium sulfo-silicates, sulfates, chromates, or the like; carbon blacks; zinc ferrites; ultramarine Blue; Pigment Brown 24; Pigment Red 101; Pigment Yellow 119; organic pigments such as azos, di-azos, quinacridones, perylenes, naphthalene tetracarboxylic acids, flavanthrones, isoindolinones, tetrachloroisoindolinones, anthraquinones, anthanthrones, dioxazines, phthalocyanines, and azo lakes; Pigment Blue 60, Pigment Red 122, Pigment Red 149, Pigment Red 177, Pigment Red 179, Pigment Red 202, Pigment Violet 29, Pigment Blue 15, Pigment Blue 15:4, Pigment Blue 28, Pigment Green 7, Pigment Yellow 147 and Pigment Yellow 150, or combinations comprising at least one of the foregoing pigments. Pigments can be used in amounts of 0.01 to 10 weight percent, based on the total weight of the composition.

Suitable dyes can be organic materials and include, for example, coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly (C₂₋₈) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti- stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3"",5""-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene; chrysene; rubrene; coronene, or the like, or combinations comprising at least one of the foregoing dyes. Dyes can be used in amounts of 0.01 to 10 weight percent, based on the total weight of the polyester-polycarbonate and poly(alkylene ester), where the use of the dyes does not significantly adversely affect the desired properties of the composition.

The compositions can further comprise an antioxidant stabilizer, for example a composition comprising a hindered diol stabilizer, a thioester stabilizer, an amine stabilizer, a phosphite stabilizer, or a combination comprising at least one of the foregoing types of stabilizers.

Exemplary antioxidants are organophosphites such as tris(2,6-di-tert-butylphenyl)phosphite, tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)]methane, commercially available from Geigy Chemical Company as Irganox 1010; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate, pentaerythrityl-tetrakis(beta-lauryl thiopropionate) (available from Crompton Corporation under the trade name Seenox 412S), or the like; amides ofbeta-(3,5-di-tert-butyl-4-hydroxyphenyl)-propionic acid or the like; or combinations comprising at least one of the foregoing antioxidants.

One exemplary antioxidant composition comprises tetrakis(2,4-di-tert-butylphenyl) 4,4'-biphenylene diphosphonite, which is available under the trade name SANDOSTAB® P-EPQ, from Clariant, herein referred to as PEPQ. Tetrakis(2,4-di-tert-butylphenyl) 4,4'-biphenylene diphosphonite and phosphoric acid can also be used, in a weight ratio of 80:20 to 20:80, specifically 70:30 to 30:70 can also be used. The antioxidant composition can also consist essentially of, or consist of, tetrakis[methylene(3,5-di-tert-butyl-4-hydroxyhydrocinnamate)]methane and pentaerythrityl-tetrakis(beta-lauryl thiopropionate), in a weight ratio of 30:60 to 70:30, specifically 40:60 to 60:40.

When present, the antioxidants are be used in an amount of 0.0001 wt% to 4 wt%, more specifically 0.01 wt% to 2 wt%, more specifically 0.1 to 1.2 wt%, based on the total weight of the thermoplastic composition.

The above thermoplastic compositions (or articles prepared therefrom) exhibit a number of desirable properties, including improved low temperature ductility and hardness (high Shore D values). In one embodiment the low temperature notched Izod ductility is at least 80% at -40°C, specifically at least 100% at -40°C, as measured by ASTM D256. In one embodiment, the low temperature notched Izod ductility is at least 50% at -60°C, or at least 80% at -60°C, as measured by ASTM D256. In another embodiment the elongation at break is at least 150% at -60°C, as measured by ASTM D256.

In some embodiments, the thermoplastic compositions have a Shore D of 45 to 75, specifically a Shore D of 47 to 71.

One or more of the foregoing properties are obtained using composition comprising 5 to 95 wt% of the polysiloxane-polycarbonate and 5 to 95 wt% poly(ester-ether). More specifically, the composition comprises 20 to 80 wt% of the polysiloxane-polycarbonate and 20 to 80 wt% of the poly(ester-ether), even more specifically from 25 to 75 wt% of the polycarbonate-polysiloxane polymer and 25 to 75 wt% of the poly(ester-ether). Each of the foregoing amounts is based on the total weight of the composition. The addition of the polysiloxane-polycarbonate copolymer to the disclosed blends provides the benefit of increased Shore D values at high low temperature ductility.

The thermoplastic compositions can be manufactured by methods generally available in the art, for example, melt blending the disclosed compositions in an extruder. In an embodiment, in one manner of proceeding, powdered polyester, poly(ester-ether) copolymer, any additional polymer, and optionally other additives are first blended, in a HENSCHEL-Mixer^{®} high speed mixer. Other low shear processes including but not limited to hand mixing can also accomplish this blending. The blend is then fed into the throat of an extruder, e.g., a twin-screw extruder via a hopper. Alternatively, at least one of the components can be incorporated into the composition by feeding directly into the extruder at the throat and/or downstream through a sidestuffer. The polyester components can be pre-blended with the carboxy-reactive compound and optional catalyst, and then combined with other additives. The extruder is generally operated at a temperature higher than that necessary to cause the composition to flow, e.g., at a temperature of 160 to 270°C, specifically 180 to 260°C, more specifically 190 to 250°C, wherein the die temperature can be different. The extrudate is immediately quenched in a water batch and pelletized. The pellets, so prepared, when cutting the extrudate can be one-fourth inch long or less as desired. Such pellets can be used for subsequent molding, shaping, or forming.

The compositions can be formed, shaped or molded into articles using common thermoplastic processes such as film and sheet extrusion, injection molding, gas-assist injection molding, extrusion molding, compression molding, blow molding, and the like. Thermoplastic substrates can be molded using one of the above processes. Single or multiple layers of coatings can further be applied to the thermoplastic substrates to impart additional properties such as scratch resistance, ultraviolet light resistance, aesthetic appeal, lubricity, and biocompatibility. Coatings can be applied through standard application techniques such as rolling, spraying, dipping, brushing, or flow coating.

Those skilled in the art will also appreciate that known surface modification processes such as to heat-setting, texturing, embossing, corona treatment, flame treatment, plasma treatment and vacuum deposition can further be applied to the above articles to alter surface appearances and impart additional functionalities to the articles.

The articles are useful in a variety of applications, for example, sporting goods component, for example a ski binding; a consumer goods component, for example a cell phone cover or a seating spring layer of a chair; or an automotive component, for example a runflat component. Other industrial applications include hoses, tubing, inboard and outboard CVJ (constant velocity joints) boots on front wheel drive vehicles, prop shaft boots, rear wheel drive boots, and air ducts. In addition, these articles can be used for such applications as wire and cable. They are further useful to impart a soft-touch feel on handles of tools and appliances.

In a specific embodiment, the article is a runflat system for a motor vehicle. The system comprises a non-standard one-piece rim having at least a first peripheral cavity or drop center to enable a tire to be mounted on the rim and a second peripheral cavity separated from the first cavity by an intermediate peripheral ridge, and a runflat device for mounting on the rim inside the tire. The runflat device comprises a rigid ring comprising the compositions described herein. The ring is split into at least two circularly arcuate elements or sectors, wherein each sector has a radially inner portion for being received in the second cavity.

The system also has means for fixing the sectors in the second cavity of the rim. The means for fixing the sectors of the ring on the rim comprise at least first means for taking up lateral forces tending to move the sectors laterally inside the second cavity of the rim. These first fixing means are constituted by spacers suitable for penetrating into the second cavity of the rim in order to engage between the intermediate ridge and at least one sector of the ring so as to act as a wedge and prevent the set of sectors of the ring from moving laterally inside the second cavity of the rim. The rigid ring exhibits a Shore D from 45 to 75, and a low temperature notched Izod ductility of at least 80% at -40°C, as measured by ASTM D256.

In another embodiment, the article is a runflat wheel for tubeless tires, comprising a circular tire rim having coaxially thereof, and intermediate opposite ends thereof an annular drop-center section, a pair of circumferential flange sections integral with and projecting radially outwardly beyond opposite ends, respectively, of the drop-center section for engagement with the circular beads of a tire mounted on said rim. The article further comprises an annular runflat device having therethrough an axial bore removably secured coaxially on the drop-center section of the rim, and having an outer peripheral surface thereof disposed normally to be spaced from a properly inflated tire on the rim, and to be engaged by an inner peripheral surface of the tire when the tire is operated in a deflated mode. The device includes an annular flange integral therewith adjacent to and projecting coaxially beyond one end of the axial bore thereof, and coaxially over an annular portion of the drop-center section adjacent one end thereof. The annular flange has in an inner peripheral surface thereof a plurality of recesses angularly spaced from each other about the axial centerline of the flange, and a plurality of axially extending projections integral with respect to and projecting radially from said annular portion of the drop-center section at angularly spaced points about its axis and into said recesses in said flange to secure said device against any movement relative to said tire rim.

The invention is further described in the following illustrative examples in which all parts and percentages are by weight unless otherwise indicated.

### EXAMPLES

The materials shown in Table 1A were used as the starting materials for the blends.

**Table 1A.**

| Name | Description | Manufacturer |
|---|---|---|
| PBT-195 | Poly(butylene terephthalate), IV = 0.63-0.68 (VALOX 195) | Sabic Innovative Plastics |
| PBT-315 | Poly(butylene terephthalate), IV = 1.15-1.22 (VALOX 315) | Sabic Innovative Plastics |
| PET-1 | Poly(ethylene terephthalate), IV = 0.54-0.57 | Invista or Futura Polymers |
| PC | LEXAN® 101 polycarbonate (PC) | Sabic Innovative Plastics |
| PC-20% siloxane | LEXAN® EXL 1414 polycarbonate comprising 20 wt% polysiloxane | Sabic Innovative Plastics |
| PC-50% BPH | LEXAN® DMX 2415 polycarbonate comprising 50 wt% 1,1-bis(4-hydroxy-3-methylphenyl)cyclohexane | Sabic Innovative Plastics |
| PC-20% PA | LEAN® SLX 1432 polycarbonate comprising 20 wt% polyarylate prepared from resorcinol and iso- and terephthaloyl chlorides | Sabic Innovative Plastics |
| MBS | MBS type impact modifier (EXL3691A) | Rohm & Haas |
| ABS | ABS type impact modifier (SG24 ABS) | Ube Cycon |
| PCCD-low IV | Low IV poly(cyclohexane-1,4-dimethylene cyclohexane-1,4-dicarboxylate) IV = 0.82-0.92 | Eastman Chemical |
| PCCD-high IV | High IV poly(cyclohexane-1,4-dimethylene cyclohexane-1,4-dicarboxylate) IV = 1.02-1.12 | Eastman Chemical |
| I-1010 | Tetrakis[methylene-(3,5-di-tert-butyl-4-hydroxyhydrocinnamate)methane] (IRGANOX 1010) | Ciba Specialty Chemicals |
| 412S | Pentaerythritol tetrakis (beta-lauryl thiopropionate) (SEENOX 412S) | Crompton |
| PEPQ | Tetrakis(2,4-di-tert-butylphenyl) 4,4'-biphenylene diphosphonite (SANDOSTAB P-EPQ) | Clariant |
| Phosphoric Acid 10% | Phosphoric acid as a 10 wt% concentration in water | |
| Naugard 445 | Hindered amine antioxidant | Crompton |
| Ultranox 626 | Bis(2,4-di-tert-butylphenyl)pentaerythritol diphosphite | |
| Mold Release | Pentaerythritol tetrastearate | |

Commercially available thermoplastic polyether-ester (TPEE) elastomers are shown in Table 1B. Table 1B contains the Shore D value, the glass transition temperature, Tg, as measured by Dynamic Mechanical Analysis (DMA) in degrees Centigrade (°C), of the polyether component, the melt temperature of the polyester component, Tm, in °C.

**Table 1B.**

| Grade name | | Hytrel 3078 | Arnitel EM400 | Hytrel 4556 | Hytrel 4056 | Hytrel 6356 | Arnitel EL630 |
|---|---|---|---|---|---|---|---|
| Manufacturer | | Dupont | DSM | Dupont | Dupont | Dupont | DSM |
| Shore D | | 30 | 35 | 45 | 40 | 63 | 63 |
| Tg | °C | -60 | -50 | -40 | -50 | 5 | 10 |
| Tm | °C | 177 | 195 | 193 | 150 | 211 | 212 |
| Co-Polyether, PTHF | Wt% | 64 | 60 | 50 | 45 | 27 | 25 |
| Co-Polyester, PBT | Wt% | 36 | 40 | 50 | 55 | 73 | 75 |
| Terephthalate vs. Isophthalate in PBT | mol% | 100 | 100 | 100 | 78 | 100 | 100 |
| Isophthalate vs. terephthalate in PBT | mol% | 0 | 0 | 0 | 22 | 0 | 0 |
| Degree of polymerization in PTHF | DP | | 21 | 14 | 11 | 10 | 10 |
| Degree of polymerization in PBT | DP | | 5 | 5 | 5 | 10 | 12 |
| ASTM notched Izod at 23°C | % ductility | 100 | 100 | 100 | 100 | 100 | 100 |
| ASTM notched Izod at -40°C | % ductility | 100 | 100 | 100 | 100 | 0 | 0 |
| Shore D | | 30 | 35 | 45 | 40 | 63 | 63 |
| Flexural Modulus | MPa | 23 | | 87 | 62 | 296 | 327 |
| Modulus of Elasticity | MPa | | 49 | 85 | 66 | 324 | 389 |
| Stress at 5% Strain | MPa | | 2 | 4 | 3 | 11 | 12 |
| Stress at 10% Strain | MPa | | 4 | 6 | 5 | 16 | 17 |
| Stress at 50% Strain | MPa | | | 9 | | | |
| Maximum Stress | MPa | | 10 | 13 | 10 | 26 | 25 |
| Elongation at Break | % | | > 300 | > 300 | > 300 | > 300 | > 300 |
| Vicat, 10N-50°C/h | °C | 80 | 134 | 158 | 110 | 196 | 198 |

### Preparation Process/Techniques.

The components were tumble-blended and then compounded on a 27 mm Wemer Pfleiderer Twin Screw Extruder with vacuum vented co-rotating mixing screws. The temperature was set at 200 to 250°C and screw speed between 400 and 450 rpm. The extrudate was cooled through a water bath prior to pelletization. The typical output rate for this extruder was 50 lbs/hr.

### Testing Protocols/Techniques/Procedures.

Chemical composition, in particular weight percent of poly(oxytetramethylene) glycol (PTHF) in the TPEE elastomers was determined with NMR Spectroscopy. A Varian Mercury NMR spectrometer (400 MHz) was utilized for these measurements. Samples were dissolved in CDC13/TFA-D (7:3 v/v) between 40 and 50 mg/ml.

Dynamic Mechanical Analyzer (DMA): TA Instrument 2980 DMA was used for dynamic mechanical analysis. The fixture type is dual cantilever. Typical dimension of the test bar is a standard IZOD bar. Liquid nitrogen was provided if low temperature measurements are needed. The upper temperature limit is 200°C. The temperature ramp rate is 3 degree per minute and frequency is fixed at 1 Hz. Glass transition information is obtained from loss tangent peak identified by the TA software.

The Vicat softening temperature (VST) is measured according to the standard ISO306 test method. The sample is subject to 10N and the heating rate for the test is 50°C/hour.

Shore D hardness was measured according to ASTM D2240 on Izod test bars. The average of at least two measurements was taken.

Flexural testing was measured using 5 by ½ x 1/8-inch (127 x 12.7 x 3.2 mm) bars at a crosshead speed of 0.05 in/min, according to ASTM 790.

Notched Izod impact testing was done on 2.5 x 1/2 x 1/8 inch (64 x 12.7 x 3.2 mm) bars according to ASTM D256. For each material/temperature combination 5 bars were tested and the average energy was recorded in J/m. Parts were conditioned at the test temperature prior to testing. In agreement with ASTM D256, the type of failure was recorded for each individual bar: complete break (C), hinge break (H), partial break (P), non-break (NB). In the test results, the last three failure types are considered "ductile", whereas complete break is considered "brittle". The percentage of the 5 bars tested that failed in a ductile manner is listed in the tables below as "% ductility".

Tensile performance data are measured according to ASTM D638 for Low-Modulus materials. This test method is used to determine the tensile properties of low-modulus plastic, ASTM Type I, dumbbell-shaped bars. The test has an initial speed of one inch per minute and after 50% strain increases to two inches per minute. The test runs until the sample break or until the extensometer reaches its extension limit of 400%. Reported are all or a selected group of properties from this list: Modulus of Elasticity, Stress at 5% Strain, Stress at 10% Strain, Stress at 50% Strain, Maximum Stress, and Elongation at Break.

### Examples 2, 5-8 and 11-13 and Reference Examples 1,3,4,9 and 10

In Table 2, examples of the invention are shown, sorted from left to right with increasing Shore D. The examples Ex 2, Ex 5-8 and Ex 11-13 demonstrate that a desirable combination of properties of (1) more than 80% ductility in ASTM Notched Izod impact at minus 40°C and (2) Shore D in the range of 47 to at least 69, can be obtained by melt blending specific polycarbonate type materials with specific TPEE materials in specific ratios.

**Table 2.**

| Table 2. | | | | | | | | | | | | | | |
|---|---|---|---|---|---|---|---|---|---|---|---|---|---|---|
| | Unit | Ref Ex 1 | Ex2 | Ref Ex3 | Ref Ex4 | Ex5 | Ex6 | Ex7 | Ex8 | Ref Ex9 | Ref Ex10 | Ex11 | Ex12 | Ex13 |
| Pc-20% PA | wt% | 49.9 | | | 49.9 | | | | | 49.9 | | | | |
| PC-20% Siloxane | wt% | | 4.9 | | | 49.9 | 34.9 | 49.9 | 49.9 | | | 74.9 | 49.9 | 49.9 |
| PC-50% BPH | wt% | | | 49.9 | | | | | | | | | | |
| PC | wt% | | | | | | | | | | 49.9 | | | |
| Hytrel 3078 | wt% | 50.0 | | 50.0 | | | | | | | | | | |
| Arnitel EM400 | wt% | | | | 50.0 | 50.0 | | | | | | | | |
| Hytrel 4556 | wt% | | | | | | 65.0 | 50.0 | | 50.0 | 50.0 | | | |
| Hytrel 4056 | wt% | | 75.0 | | | | | | 50.0 | | | 25.0 | | |
| Hytrel 6356 | wt% | | | | | | | | | | | | 50.0 | |
| Arnitel EL630 | wt% | | | | | | | | | | | | | 50.0 |
| PEPQ | wt% | 0.10 | 0.10 | 0.10 | 0.10 | 0.10 | 0.10 | 0.10 | 0.10 | 0.10 | 0.10 | 0.10 | 0.10 | 0.10 |
| Phosphoric Acid 10% | Wt% | 0.05 | 0.05 | 0.05 | 0.05 | 0.05 | 0.05 | 0.05 | 0.05 | 0.05 | 0.05 | 0.05 | 0.05 | 0.05 |
| Properties | | | | | | | | | | | | | | |
| %PTHF in composition | wt% | 32 | 34 | 32 | 30 | 30 | 33 | 25 | 22 | 25 | 25 | 11 | 13 | 12 |
| ASTM notched Izod at -40°C. | % ductility | 100 | 100 | 100 | 100 | 100 | 100 | 100 | 100 | 100 | 100 | 100 | 100 | 100 |
| | J/m | 516 | 809 | 563 | NB | 706 | 870 | 827 | 972 | 796 | 908 | 518 | 538 | 501 |
| Shore D | | 47 | 49 | 49 | 50 | 50 | 50 | 54 | 59 | 63 | 64 | 66 | 67 | 69 |
| Vicat, 10N-50°C/h | °C | 111 | 84 | 104 | 115 | 107 | 117 | 103 | 62 | 115 | 110 | 79 | 102 | 103 |

The compositions of the invention are Ex2, Ex5, Ex6, Ex 7, Ex8, Ex 11, Ex 12, and Ex13. Comparing examples Ex2, Ex5, Ex6, Ex7, Ex8 and Ex1 with examples Ex 12 and Ex13, it becomes obvious that certain compositions exhibit over 50% ductility in ASTM Notched Izod impact at the extreme low temperature of minus 60°C. These especially preferred blends contain TPEE where the PTHF level is higher than 35 wt%, the polydiorganosiloxane content in the polycarbonate copolymer is 20 wt%, and the amount of polycarbonate-polyorganosiloxane copolymer is greater than 20 wt%.

### Comparative Examples CE1-CE18

From the comparative examples CE 1 through CE 18 in Table 3 and Table 4, as well as from the materials shown in Table 1B, it becomes clear that around a Shore D value of 45 to 46 a material behavior transition is expected to occur from high ductility as measured by ASTM Notched Izod impact at minus 40°C, to low ductility as measured by ASTM Notched Izod impact at minus 40°C. Unexpectedly, that transition is not observed in the examples of the invention given in Table 2.

**Table 3.**

| | | CE.1 | CE.2 | CE.3 | CE.4 | CE.5 | CE.6 | CE.7 | CE.8 | CE.9 |
|---|---|---|---|---|---|---|---|---|---|---|
| PET | wt% | 27.5 | | | | | | | | |
| PBT -low IV | wt% | | 15.0 | 15.0 | | | | 40.0 | | |
| PBT - high IV | wt% | | | | 15.0 | 40.0 | | | | |
| PCCD - low IV | wt% | | | | | | 40.0 | | | |
| PCCD - high IV | wt% | | | | | | | | 40.0 | 40.0 |
| Arnitel EM400 wt% | wt% | | | | | | | | | |
| Hytrel 4056 | wt% | | | | | | | 59.6 | 59.6 | 59.6 |
| Hytrel 6356 | wt% | 72.1 | 84.6 | 84.6 | 84.6 | 59.6 | 59.6 | | | |
| Irg 1010 | wt% | 0.20 | 0.20 | 0.20 | 0.20 | 0.20 | 0.20 | 0.20 | 0.20 | 0.20 |
| Seenox 412S | wt% | 0.20 | 0.20 | 0.20 | 0.20 | 0.20 | 0.20 | 0.20 | 0.20 | 0.20 |
| Properties | | | | | | | | | | |
| %PTHF in composition | wt% PTHF | 19 | 23 | 23 | 23 | 16 | 16 | 27 | 27 | 27 |
| ASTM notched Izod at 23°C | % ductility | 80 | 100 | 100 | 100 | 40 | 100 | 100 | 100 | 100 |
| | J/m | 654 | 798 | 797 | 764 | 266 | 916 | 710 | 368 | NB |
| ASTM notched, Izod at -40°C | % ductility | 0 | 0 | 0 | 0 | 0 | 0 | 40 | 40 | 80 |
| | J/m | 100 | 111 | 139 | 164 | 74 | 45 | 464 | 336 | 846 |
| Shore D | | 60 | 57 | 57 | 59 | 62 | 60 | 53 | 45 | 45 |
| Vicat, 10N-50°C/h | °C | 198 | 199 | 200 | 198 | 213 | 193 | 147 | 116 | 121 |

**Table 4.**

| | | CE.10 | CE.11 | CE.12 | CE.13 | CE.14 | CE.15 | CE.16 | CE.17 | CE.18 |
|---|---|---|---|---|---|---|---|---|---|---|
| PET | wt% | 15.0 | 15.0 | | | | | | | |
| PBT - low IV | wt% | | | | | | | | | |
| PBT - high IV | wt% | | | 15.0 | 27.5 | 40.0 | | | | |
| PCCD - low IV | wt% | | | | | | 15.0 | 27.5 | | |
| PCCD - high IV | wt% | | | | | | | | 15.0 | 15.0 |
| Arnitel EM400 | wt% | 84.6 | | 84.6 | | 59.6 | | 72.1 | | |
| Hytre14056 | wt% | | 84.6 | | 72.1 | | 84.6 | | 84.6 | 84.6 |
| Hytrel 6356 | wt% | | | | | | | | | |
| Irg 1010 | wt% | 0.20 | 0.20 | 0.20 | 0.20 | 0.20 | 0.20 | 0.20 | 0.20 | 0.20 |
| Seenox 412S | wt% | 0.20 | 0.20 | 0.20 | 0.20 | 0.20 | 0.20 | 0.20 | 0.20 | 0.20 |
| Property | | | | | | | | | | |
| %PTHF in composition | wt% PTHF | 51 | 38 | 51 | 32 | 36 | 38 | 43 | 38 | 38 |
| ASTM notched Izod at 23°C | % ductility | 100 | 100 | 100 | 100 | 100 | 100 | 100 | 100 | 100 |
| | J/m | NB | 271 | NB | NB | NB | 221 | NB | NB | NB |
| ASTM notched Izod at -40°C | % ductility | 100 | 100 | 100 | 100 | 100 | 100 | 100 | 100 | 100 |
| | J/m | NB | NB | 376 | NB | NB | NB | NB | NB | NB |
| Shore D | | 41 | 43 | 37 | 46 | 46 | 39 | 41 | 40 | 39 |
| Vicat, 10N-50°C/h | °C | 141 | 112 | | 124 | 161 | 107 | 147 | 109 | 106 |

### Comparative Examples C19-C23

Table 5 shows compositions containing polycarbonate or polycarbonate-polyarylate copolymer (polyestercarbonate copolymer). This data indicates that for the present invention, where polycarbonate is a polycarbonate-polyarylate polymer, the Shore D value should be lower than 72.

**Table 5.**

| | | CE19 | CE20 | CE21 | CE22 | CE23 |
|---|---|---|---|---|---|---|
| PC | wt% | 49.9 | | | 49.9 | 74.9 |
| PC-20% PA | wt% | | 49.9 | 49.9 | | |
| Hytrel 4056 | wt% | | | | | 25.0 |
| Hytrel 6356 | wt% | 50.0 | 50.0 | | | |
| Arnitel EL630 | wt% | | | 50.0 | 50.0 | |
| PEPQ | wt% | 0.10 | 0.10 | 0.10 | 0.10 | 0.10 |
| Phosphoric Acid (10wt%) | wt% | 0.05 | 0.05 | 0.05 | 0.05 | 0.05 |
| Properties | | | | | | |
| %PTHF in composition | wt% PTHF | 13 | 13 | 12 | 12 | 11 |
| ASTM notched Izod at -40°C | % ductility | 0 | 0 | 0 | 0 | 0 |
| J/m | J/m | 36 | 26 | 35 | 29 | 35 |
| Shore D | | 72 | 73 | 74 | 74 | 75 |
| Elongation at Break | % | 170 | 210 | 240 | 200 | 120 |
| Vicat, 10N-50°C/h | °C | 64 | 54 | 59 | 60 | 96 |

### Examples Ex14-Ex22

Examples of preferred compositions are shown in Table 6. These examples demonstrate that the invention also pertains to compositions that contain colorants and/or moderate amounts (10 wt%) of impact modifier.

**Table 6.**

| Component | Units | Ex 14 | Ex15 | Ex16 | Ex17 | Ex18 | Ex19 | Ex20 | Ex21 | Ex22 |
|---|---|---|---|---|---|---|---|---|---|---|
| Hytrel14556 | wt% | 64.900 | 49.900 | 34.910 | 58.369 | 31.430 | 44.900 | 58.370. | 44.875 | 31.410 |
| PC-20% Polyorganosiloxane | wt % | 34.950 | 49.900 | 64.840 | 31.430 | 31.430 | 44.899 | 31.430 | 44.875 | 58.339 |
| MBS Impact Modifier | wt % | | | | 10.000 | 10.000 | 10.000 | 10.000 | | |
| ABS Impact Modifier | wt % | | | | | | | | 10.000 | 10.000 |
| PEPQ | wt% | 0.100 | 0.100 | 0.100 | 0.100 | 0.100 | 0.100 | 0.100 | 0.100 | 0.100 |
| Phosphoric Acid 10% | wt% | 0.050 | 0.050 | 0.050 | 0.050 | 0.050 | 0.050 | 0.050 | 0.050 | 0.050 |
| Solvent Yellow 93 | wt % | | 0.050 | 0.050 | 0.050 | | | | | |
| Solvent Red 135 | wt% | | | 0.050 | | 0.050 | 0.050 | | | |
| Solvent Green 3 | wt% | | | | | | | 0.050 | 0.100 | 0.100 |
| Pigment Carbon Black | wt % | | | | 0.001 | | 0.001 | | | 0.001 |
| Properties | | | | | | | | | | |
| ASTM notched Izod at -60°C | % ductility | 100 | 100 | 100 | 100 | 100 | 100 | 100 | 100 | 100 |
| J/m | J/m | 926 | 743 | 545 | 966 | 592 | 668 | 909 | 818 | 616 |
| Shore D | | 56 | 61 | 64 | 53 | 63 | 58 | 53 | 58 | 63 |
| Vicat, 10N-50°C/h | °C | 118 | 104 | 101 | 109 | 99 | 98 | 109 | 99 | 99 |
| Flexural Modulus | MPa | 292 | 566 | 973 | 275 | 829 | 477 | 287 | 519 | 813 |
| Modulus of Elasticity | MPa | 411 | 828 | 2556 | 485 | 1815 | 821 | 386 | 972 | 1910 |
| Stress at 5% Strain | MPa | 11 | 17 | 27 | 10 | 22.7 | 15 | 10 | 16 | 24 |
| Stress at 10% Strain | MPa | 13 | 18 | 26 | 12 | 22 | 16 | 12 | 17 | 23 |
| Stress at 50% Strain | MPa | 15 | 18 | 23 | 14 | 21 | 16 | 13 | 17 | 22 |
| Stress at Break | MPa | 29 | 31 | 27 | 24 | 26 | 27 | 20 | 28 | 27 |
| Elongation at Break | % | 180 | 220 | 110 | 190 | 140 | 210 | 210 | 200 | 140 |

### Examples E23-E24

### Preparation Process/Techniques.

Synthesis of TPEE elastomers was carried out at in pilot scale 'helicone' reactors. The helicone reactors have a capacity of 10 or 40 liters and are equipped with a special design of twin opposing helical blades with 270 degree twist; constructed of 316 SS with 16g polish finish. The blade speed can be varied from 1 to 65 rpm. The agitators are connected to a 7.5 HP Constant Torque Inverter Duty Motor, which operates at 230/460 VAC, 3 PH and 60 Hz. The helicones are also designed with an overhead condenser to condense the vapors in the glycolysis, transesterification (if any) and polymerization stages. A nitrogen purge and a two-stage vacuum were available to regulate the pressure of the helicone reactor.

Reactants for the synthesis of the TPEE elastomers were charged to the heated reactor under agitation. The reaction mixture was refluxed for 1.5-2.5 hours before the temperature was raised to 250°C prior to going to the polymerization stage. For the polymerization stage, a vacuum was applied to the helicone reactor and the reflux of butane diol to the reactor was discontinued. The speed of the agitator was set to 60 % of max and the target amps of the motor were 3.5 amps. The system pressure was reduced to sub 1 Torr (0.133 kilopascal) by the vacuum blower and the reaction temperature was maintained at 250°C. The reaction was carried out under dynamic vacuum until the polymer reached a maximum viscosity. The reaction was stopped and the polymer was cast in blobs. The blobs were then allowed to cool before they were granulated.

### Testing Protocols/Techniques/Procedures.

A Perkin Elmer Pyris 6 Differential Scanning Calorimeter (DSC) was used to determine melting temperature (Tm) and crystallization temperature (Tc) of the TPEE elastomers. Samples were loaded at 50°C and subjected to the heating to 250°C at 20°C/min, held for one minute at this temperature then cooled at 20°C/min to -40°C, whereupon the sample was heated to 250°C at 20°C/min followed by cooling to -40°C at 20°C/min. The first heating cycle was intended to impart a common thermal history to the samples, and measured properties were determined from the second heating cycle of the sample material. Endo- or exothermic peaks were integrated to determine the heats of melting and crystallization and the minima or maxima of these peaks were taken as the melting or crystallization temperatures.

The chemical composition of the TPEE elastomers was determined with NMR Spectroscopy. A Varian Mercury NMR spectrometer (400 MHz) was utilized for these measurements. Samples were dissolved in CDC13/TFA-D (7:3 v/v) between 40 and 50 mg/ml. Table 7 shows elastomers used in Examples 23 and 24:

**Table 7**

| Starting Materials | E23 | E24 |
|---|---|---|
| Dimethyl Terephthalate (lbs) | 11.18 (5.07 kg) | 11.18 (5.07 kg) |
| Dimethyl Isophthalate (lbs) | 0.24 (0.11 kg) | 0.24 (0.11 kg) |
| PolyTHF 2000 (lbs) | 11.32 (5.13 kg) | 10.06 (4.56 kg) |
| PolyTHF 1000 (lbs) | 1.26 (0.57 kg) | 2.52 (1.14 kg) |
| BDO (lbs) | 15.00 (6.80 kg) | 15.00 (6.80 kg) |
| TPT (mL) | 14.00 | 14.00 |

Table 8 shows the analysis of elastomers used in Examples 23 and 24.

**Table 8**

| | | E23 | E24 |
|---|---|---|---|
| Weight % | Phthalate | 34% | 34% |
| | BDO | 15% | 15% |
| | PTHF | 51% | 51% |
| | PET | 0.00% | 0.00% |
| | ISO | 1.6% | 1.6% |
| | TERE | 98.4% | 98.4% |
| Degree of Polymerization | PTHF | 20 | 18 |
| | PBT | 6 | 6 |
| DSC | Tm (°C) | 199 | 194 |
| | dHm (J/g) | 19 | 17 |
| | Tc (°C) | 118 | 117 |
| | dHc (J/g) | -21 | -21 |

Table 9 shows the performance properties of the elastomer compositions.

**Table 9**

| | Units | Ex23 | Ex24 |
|---|---|---|---|
| Elastomer | % | 49.950 | - |
| Elastomer | % | | 49.950 |
| PC-20% Siloxane | % | 49.900 | 49.900 |
| PEPQ | % | 0.100 | 0.100 |
| Phosphoric Acid 10% | % | 0.050 | 0.050 |
| | SUM | 100 | 100 |
| ASTM notched Izod at -40°C | % ductility | 100 | 100 |
| | J/m | 700 | 630 |
| ASTM notched Izod at -60°C | % ductility | 80 | 100 |
| | J/m | 540 | 540 |
| Shore D | | 58 | 57 |
| Vicat, 10N-50°C/h | °C | 97 | 101 |
| Flexural Modulus | MPa | 500 | 480 |
| Modulus of Elasticity | MPa | 1010 | 1140 |
| Stress at 5% Strain | MPa | 14 | 14 |
| Stress at 10% Strain | MPa | 15 | 15 |
| Stress at 50% Strain | MPa | 16 | 16 |
| Stress at Break | MPa | 23 | 22 |
| Elongation at Break | % | 190 | 190 |

### Discussion

Examples 23 and 24 demonstrated that modifying the PBT moieties of the PBT-pTHF TPEE with an amount of isophthalate units versus terephthalate units did not affect the ability to obtain excellent low temperature ductility. These same examples furthermore demonstrated that the molecular weight of the pTHF moieties in PBT-pTHF TPEE can be varied within certain ranges without negatively affecting the low temperature ductility.

## Claims

1. A composition comprising, based on the total weight of the composition:
from 5 to 95 weight percent of a polysiloxane-polycarbonate copolymer comprising units of the formulas 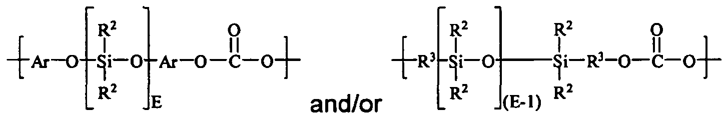 wherein each R² is independently a C₁₋₁₃ monovalent organic group, each Ar is independently a C₆₋₃₆ arylene group wherein the bonds are directly connected to an aromatic moiety, each R³ is independently a divalent C₁₋₃₀ organic group, and E is an integer having an average value of 2 to 1,000, wherein the number of units and the value of E is such that the polycarbonate comprises at least 6 weight percent of organosiloxane units;
from 5 to 95 weight percent of a poly(ester-ether) copolymer, wherein the poly(ester-ether) copolymer comprises
units derived from terephthalic acid or a chemical equivalent thereof, units derived from butane diol or a chemical equivalent thereof, and 23 to 70 weight percent of units derived from poly(oxytetramethylene) glycol or a chemical equivalent thereof, based on the weight of the copolymer;
from 0 to 50 weight percent of at least one polymer selected from the group consisting of polysulfones, polyethersulfones, polyimides, polyetherimides, polyphenylene ether, impact modifiers and combinations thereof; and
from 0.001 to 0.5 weight percent of a quencher;
wherein the composition exhibits a Shore D from 45 to 75, and a low temperature notched Izod ductility of at least 80% at -40°C, as measured by ASTM D256.

2. The composition of claim 1, wherein a sample comprising the composition has a Shore D from 47 to 71, a low temperature notched Izod ductility of at least 50% at -60°C, as measured by ASTM D256, and an elongation at break of at least 150% at -60°C, as measured by ASTM D638.

3. The composition of claim 1, wherein the polysiloxane-polycarbonate comprises units of the formula 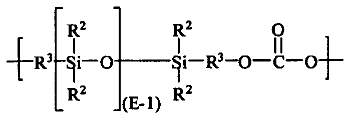 wherein each R² is independently the same or different C₁₋₃ monovalent organic group, each R³ is the same or different divalent C₁₋₁₀ organic group, and E is an integer from 2 to 500.

4. The composition of claim 1, wherein the poly (ester-ether) copolymer comprises 25 to 55 weight percent of units derived from poly (oxytetramethylene) glycol, based on the weight of the copolymer, and wherein the poly (oxytetramethylene)glycol has a molecular weight of 100 to 5000.

5. The composition of claim 1, wherein the poly (ester-ether) copolymer further comprises units derived from isophthalic acid or a chemical equivalent thereof.

6. The composition of claim 1, wherein the poly (ester-ether) further comprises units derived from the group consisting of diethylene glycol, ethylene glycol, and combinations thereof.

7. The composition of claim 1, further comprising an antioxidant stabilizer, an impact modifier, and colorants.

8. The composition of claim 1 comprising, based on the total weight of the composition: from 20 to 80 weight percent of the polysiloxane-polycarbonate copolymer which comprises units of the formula 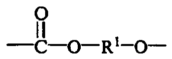 wherein each R¹ comprises units the formula 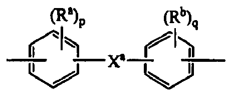 wherein R^{a} and R^{b} are each independently a halogen or a C₁₋₁₂ alkyl, X^{a} is a single bond, -O-, -S-, -S(O)-, -S(O)₂-, -C(O)-, or a C₁₋₁₈ organic group, and p and q are each independently 0 to 4, and
from 20 to 80 weight percent of the poly(ester-ether) copolymer; wherein the composition exhibits a low temperature notched Izod ductility of at least 100% at -40°C, as measured by ASTM D256.

9. The composition of claim 1 comprising, based on the total weight of the composition: from 20 to 80 weight percent of the polysiloxane-polycarbonate copolymer which comprises 75 to 95 weight percent of units derived from bisphenol A and 5 to 25 weight percent of units of the formula 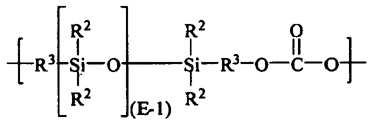 wherein each R² is independently the same or different C₁₋₃ monovalent organic group, each R³ is the same or different divalent C₁₋₁₀ organic group, and E is an integer from 2 to 500;
from 20 to 80 weight percent of the poly(ester-ether) copolymer; and
from 0.1 to 4 weight percent an antioxidant; wherein the composition exhibits a low temperature notched Izod ductility of at least 80% at -60°C, as measured by ASTM D256.

10. A method of forming a composition comprising melt blending the components of the composition of claim 1.

11. An article comprising the composition of claims 1-10.

12. The article of claim 11, wherein the article is in the form of a component of a runflat system for automobiles.

13. A method of forming an article, comprising shaping, extruding, blow molding, or injection molding the composition of claims 1-9 to form the article.

## Patentansprüche

1. Zusammensetzung, umfassend, auf der Grundlage des Gesamtgewichts der Zusammensetzung: von 5 bis 95 Gew.-% von einem Polysiloxan-Polycarbonat-Copolymer, umfassend Einheiten der folgenden Formeln: 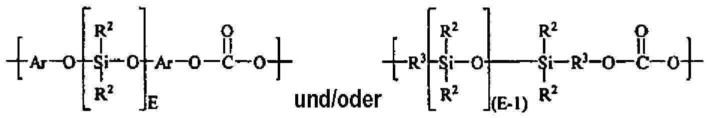 wobei R² jeweils unabhängig eine einwertige organische C₁₋₁₃-Gruppe ist, Ar jeweils unabhängig eine C₆₋₃₆-Arylengruppe ist, wobei die Bindungen direkt mit einer aromatischen Einheit verbunden sind, R³ jeweils unabhängig eine zweiwertige organische C₁₋₃₀-Gruppe ist, und E eine ganze Zahl mit einem Durchschnittswert von 2 bis 1000 ist, wobei die Anzahl von Einheiten und der Wert von E so sind, dass das Polycarbonat mindestens 6 Gewichtsprozent von Organosiloxaneinheiten umfasst;
von 5 bis 95 Gew.-% von einem Poly(ester-ether)-Copolymer, wobei das Poly(ester-ether)-Copolymer folgendes umfasst:
Einheiten, die sich von Terephthalsäure oder einem chemischen Äquivalent davon ableiten,
Einheiten, die sich von Butandiol oder einem chemischen Äquivalent davon ableiten, und
23 bis 70 Gew.-% von Einheiten, die sich von Poly(oxytetramethylen)glycol oder einem chemischen Äquivalent davon ableiten, auf der Grundlage des Gewichts des Copolymers;
von 0 bis 50 Gew.-% von mindestens einem Copolymer, ausgewählt aus der Gruppe bestehend aus Polysulfonen, Polyethersulfonen, Polyimiden, Polyetherimiden, Polyphenylenether, Schlagzägigkeitsmodifizierern und Kombinationen davon; und
von 0,001 bis 0,5 Gew.-% von einem Quencher;
wobei die Zusammensetzung eine Shore-Härte D von 45 bis 75 und eine Niedertemperatur-Izod-Duktilität, gekerbt, von mindestens 80% bei -40°C, wie gemessen gemäß ASTM D256, aufweist.

2. Zusammensetzung nach Anspruch 1, wobei eine Probe, die die Zusammensetzung einschließt, eine Shore-Härte D von 47 bis 71, eine Niedertemperatur-Izod-Duktilität, gekerbt, von mindestens 50% bei -60°C, wie gemessen gemäß ASTM D256, und eine Reißdehnung von mindestens 150 % bei -60 °C, wie gemessen gemäß ASTM D638, aufweist.

3. Zusammensetzung nach Anspruch 1, wobei das Polysiloxan-Polycarbonat Einheiten der folgenden Formel umfasst 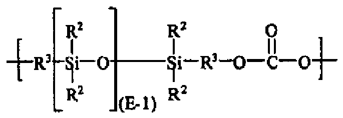 wobei R² unabhängig die gleiche oder eine verschiedene einwertige organische C₁₋₃-Gruppe ist, R³ die gleiche oder eine verschiedene zweiwertige organische C₁₋₁₀-Gruppe ist, und E eine ganze Zahl von 2 bis 500 ist.

4. Zusammensetzung nach Anspruch 1, wobei das Poly(ester-ether)-Copolymer 25 bis 55 Gew.-% von Einheiten umfasst, die sich von Poly(oxytetramethylen)glycol ableiten, auf der Grundlage des Gewichts des Copolymers, und wobei das Poly(oxytetramethylen)glycol ein Molekulargewicht von 100 bis 5000 aufweist.

5. Zusammensetzung nach Anspruch 1, wobei das Poly(ester-ether)-Copolymer weiterhin Einheiten umfasst, die sich von Isophthalsäure oder einem chemischen Äquivalent davon ableiten.

6. Zusammensetzung nach Anspruch 1, wobei der Poly(ester-ether) weiterhin Einheiten umfasst, die sich von der Gruppe ableiten, bestehend aus Diethylenglycol, Ethylenglycol, und Kombinationen davon.

7. Zusammensetzung nach Anspruch 1, weiterhin umfassend einen Antioxidans-Stabilisator, einen Schlagzähigkeitsmodifizierer und Farbmittel.

8. Zusammensetzung nach Anspruch 1, umfassend, auf der Grundlage des Gesamtgewichts der Zusammensetzung: von 20 bis 80 Gew.-% des Polysiloxan-Polycarbonat-Copolymers, welches Einheiten der folgenden Formel umfasst 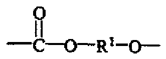 wobei R¹ jeweils Einheiten der folgenden Formel umfasst 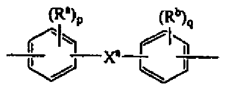 wobei R^{a} und R^{b} jeweils unabhängig ein Halogen oder ein C₁₋₁₂-Alkyl sind, X^{a} eine Einfachbindung, -O-, -S-, -S(O)-, -S(O)₂-, -C(O)- oder eine organische
C₁₋₁₈-Gruppe ist, und p und q jeweils unabhängig 0 bis 4 sind, und von 20 bis 80 Gew.-% des Poly(ester-ether)-Copolymers, wobei die Zusammensetzung eine Niedertemperatur-Izod-Duktilität, gekerbt, von mindestens 100% bei -40°C, wie gemessen gemäß ASTM D256,
aufweist.

9. Zusammensetzung nach Anspruch 1, umfassend, auf der Grundlage des Gesamtgewichts der Zusammensetzung: von 20 bis 80 Gew.-% des Polysiloxan-Polycarbonat-Copolymers, das 75 bis 95 Gew.-% von Einheiten umfasst, die sich von Bisphenol A ableiten, und 5 bis 25 Gew.-% von Einheiten der folgenden Formel 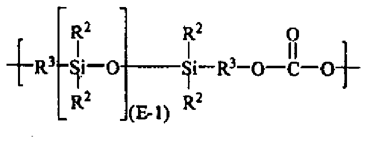 wobei R² jeweils unabhängig die gleiche oder eine verschiedene einwertige organische C₁₋₃-Gruppe ist, R³ jeweils die gleiche oder eine verschiedene zweiwertige organische C₁₋₁₀-Gruppe ist, und E eine ganze Zahl von 2 bis 500 ist;
von 20 bis 80 Gew.-% des Poly(ester-ether)-Copolymers; und
von 0,1 bis 4 Gew.-% von einem Antioxidans; wobei die Zusammensetzung eine Niedertemperatur-Izod-Duktilität, gekerbt, von mindestens 80% bei -60°C, wie gemessen gemäß ASTM D256, aufweist.

10. Verfahren zum Bilden einer Zusammensetzung umfassend das Schmelzmischen der Komponenten der Zusammensetzung von Anspruch 1.

11. Gegenstand umfassend die Zusammensetzung der Ansprüche 1-10.

12. Gegenstand nach Anspruch 11, wobei der Gegenstand in der Form von einer Komponente von einem Notlaufsystem für Kraftfahrzeuge vorliegt.

13. Verfahren zum Bilden eines Gegenstandes umfassend das Formen, Extrudieren, Blasformen oder Spritzgießen der Zusammensetzung der Ansprüche 1-9, um den Gegenstand zu bilden.

## Revendications

1. Composition comprenant à base du poids total de la composition :
de 5 à 95 % en poids d'un copolymère polysiloxane-polycarbonate comprenant des unités des formules suivantes: 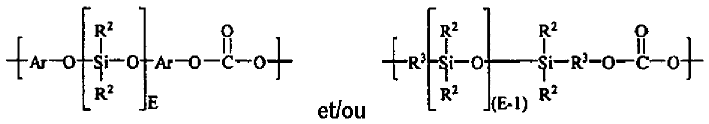 dans laquelle chaque R² est indépendamment un groupe organique monovalent en C₁₋₁₃, chaque Ar est indépendamment un groupe arylène en C₆₋₃₆, dans laquelle les liaisons sont directement raccordées à un groupement aromatique, chaque R³ est indépendamment un groupe organique divalent en C₁₋₃₀, et E est un nombre entier ayant une valeur moyenne de 2 à 1000, dans lequel le nombre des unités et la valeur E est tel que le polycarbonate comprend au moins 6% en poids des unités organosiloxane ;
de 5 à 95 % en poids d'un copolymère poly(ester-éther), dans lequel le copolymère poly(ester-éther) comprend
des unités dérivées de l'acide téréphtalique ou d'un équivalent chimique de celui-ci,
des unités dérivés du butane diol ou d'un équivalent chimique de celui-ci, et 23 à 70 % en poids des unités dérivés de
poly(oxytétraméthylène)glycol ou d'un équivalent chimique de celui-ci, à base du poids du copolymère ;
de 0 à 50 % en poids d'au moins un polymère sélectionné parmi le groupe consistant en les polysulfones, les poyléthersulfones, les polyimides, les polyétherimides, le polyphenylène éther, les modificateurs d'impact et les combinaisons de ceux-ci ; et
de 0,001 à 0,5 % en poids d'un quencher ;
dans laquelle la composition a une dureté Shore D de 45 à 75, et une ductilité d'Izod encochée à base de la température d'au moins 80% à -40°C, tel que mesuré selon ASTM D256.

2. Composition selon la revendication 1, dans laquelle un échantillon comprenant la composition a une dureté Shore D de 47 à 71, une ductilité d'Izod encochée à basse température d'au moins 50% à -60°C, tel que mesuré selon ASTM D256, et un allongement à la rupture d'au moins 150% à -60°C, tel que mesuré selon ASTM D638.

3. Composition selon la revendication 1, dans laquelle le polysiloxane-polycarbonate comprenant des unités de la formule 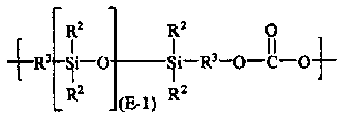 dans laquelle chaque R² est indépendamment le même groupe ou un groupe différent organique monovalent en C₁₋₃, chaque R³ est le même groupe ou un groupe différent organique divalent en C₁₋₁₀, et E est un nombre entier de 2 à 500.

4. Composition selon la revendication 1, dans laquelle le copolymère poly(ester-éther) comprend 25 à 55 % en poids des unités dérivées de poly(oxytétraméthylène)glycol, à base du poids du copolymère, et dans laquelle le poly(oxytétraméthylène)glycol a un poids moléculaire de 100 à 5000.

5. Composition selon la revendication 1, dans laquelle le copolymère poly(ester-éther) comprend en outre des unités dérivées de l'acide isophtalique ou d'un équivalent chimique de celui-ci.

6. Composition selon la revendication 1, dans laquelle le poly(ester-éther) comprend des unités dérivées du groupe consistant en le diéthylène glycol, l'éthylène glycol et les combinaisons de ceux-ci.

7. Composition selon la revendication 1, comprenant en outre un stabilisateur antioxydant, un modificateur d'impact et des colorants.

8. Composition selon la revendication 1 comprenant à base du poids total de la composition : de 20 à 80 % en poids du copolymère polysiloxane-polycarbonate qui comprend des unités de la formule suivante: 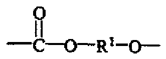 dans laquelle chaque R¹ comprend des unités de la formule suivante 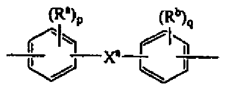 dans laquelle R^{a} et R^{b} chacun sont indépendamment un halogène, ou un alkyle en C₁₋₁₂, X^{a} est une liaison simple, -O-, -S-, -S(O)-, -S(O)₂-, -C(O)- ou un groupe organique en C₁₋₁₈, et p et q chacun sont indépendamment 0 à 4, et
de 20 à 80 % en poids du copolymère poly(ester-éther) ; dans laquelle la composition a une ductilité d'Izod encochée à basse température d'au moins 100% à -40°C, tel que mesuré selon ASTM D256.

9. Composition selon la revendication 1 comprenant à base du poids total de la composition : de 20 à 80 % en poids du copolymère polysiloxane-polycarbonate qui comprend 75 à 95 % en poids des unités dérivées de bisphénol A et 5 à 25 % en poids des unités de la formule suivante 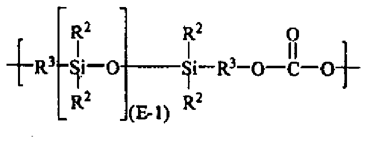 dans laquelle chaque R² est indépendamment le même groupe ou un groupe différent organique monovalent en C₁₋₃, chaque R³ est le même groupe ou un groupe différent organique divalent en C₁₋₁₀, et E est un nombre entier de 2 à 500 ;
de 20 à 80 % en poids du copolymère poly(ester-éther) ; et
de 0,1 à 4 % en poids d'un antioxydant ; dans laquelle la composition a une ductilité d'Izod encochée à basse température d'au moins 80% à - 60°C, tel que mesuré selon ASTM D256.

10. Méthode pour former une composition comprenant l'étape consistant à mélanger à la coulée les composants de la composition selon la revendication 1.

11. Article comprenant la composition selon les revendications 1-10.

12. Article selon la revendication 11, dans laquelle l'article est en forme d'un composant d'un système de roulage à plat pour les automobiles.

13. Méthode pour former un article comprenant les étapes consistant à former, extruder, mouler par soufflage ou mouler par injection la composition selon les revendications 1-9 pour former l'article.
